# FASCICULE DE BREVET EUROPEEN

(11) **EP 0 405 358 B1**
(45) Date de publication et mention de la délivrance du brevet: **26.05.1993**
(21) Numéro de dépôt: 90111869.5
(22) Date de dépôt: 22.06.1990
(51) Int. Cl.: G01G 19/00, G07B 17/02

(54) **Pèse-lettre de machine à affranchir et machine à affranchir résultante**
Briefwaage einer Frankiermaschine und davon ausgehende Frankiermaschine
Letter scales for a franking machine and resulting franking machine

(30) Priorité: 30.06.1989 FR 8908828
(43) Date de publication de la demande: 02.01.1991
(73) Titulaire: NEOPOST INDUSTRIE, F-92220 Bagneux (FR)
(72) Inventeur: Haroutel, Jean-Claude, F-91400 Orsay (FR)
(74) Mandataire: Weinmiller, Jürgen

(56) Documents cités:
- DE-A- 3 634 381
- FR-A- 2 444 932
- US-A- 4 047 006
- US-A- 4 051 913
- US-A- 4 376 981

## Description

La présente invention porte sur un pèse-lettre pour une machine à affranchir, pour l'élaboration dans un calculateur de taxes du montant d'affranchissement que la machine doit imprimer sur chaque lettre. Elle porte en particulier sur un pèse-lettre pour des petites machines à affranchir destinées à l'affranchissement de volumes quotidiens de courrier restant relativement faibles. Elle porte également sur une machine à affranchir faisant utilisation de ce pèse-lettre.

Les machines à affranchir courantes sont couplées à une balance électronique assurant une mesure fine du poids de chaque lettre à affranchir. Cette mesure fine du poids est transmise au calculateur de taxes, en général intégré dans la balance électronique ou dans la machine à laquelle la balance est reliée. Un clavier permet de rentrer dans le calculateur des données d'expédition définissant notamment le pays de destination et le mode d'expédition, pour l'élaboration de la taxe convenable. La taxe élaborée est affichée sur l'écran et transmise à la tête d'impression de machine à affranchir, qui l'imprime sur la lettre.

Ces balances électroniques sont relativement complexes et de coût élevé; elles sont peu justifiées lorsque les volumes de courrier à affranchir sont faibles.

Selon le brevet FR-A-2444932, le pèse-lettre est à contact glissant mobile avec le plateau de pesée, et à rangée de plaquettes de contact le long du trajet du contact glissant. Ces plaquettes correspondent à différentes tranches successives de poids dans chacune desquelles le montant de taxe reste constant. Les plaquettes de contact sont reliées à des contacts individuels de même rang de différents sélecteurs de type d'envoi. Ces sélecteurs sont quant à eux actionnés par des touches. Leurs contacts individuels sont reliés à un dispositif de commande de codage lui-même connecté au dispositif d'indication de montant de taxe. Ce dispositif de commande de codage est à réseau conducteur et à diodes. Avantageusement, les différentes sources et les photodétecteurs associés sont placés d'un même côté d'une plaque mobile avec le plateau de pesée et pourvue de zones réfléchissantes couplant l'une ou l'autre des sources à son photodétecteur. De préférence, les éléments de détection sont alignés à une même hauteur et les zones réfléchissantes sont décalées perpendiculairement au déplacement du plateau de pesée ou de la plaque qui les porte et dimensionnées pour traduire les tranches successives de poids. Les éléments de détection sont reliés aux contacts individuels de sélecteurs de type d'envoi, comme précédemment.

Le brevet DE-A1-3634381 décrit une machine combinée de pesée et d'affranchissement. Le pèse-lettre à configuration massive est à plateau de réception et mécanisme de pesée d'une lettre maintenue en position verticale dans une fente définie entre deux parois verticales. Ces parois appartiennent à deux carters, dont l'un est mobile pour une variation de largeur de fente selon l'épaisseur des lettres. Ce mécanisme de pesée est couplé à un calculateur de taxes, monté avec le dispositif d'affranchissement dans l'un des carters. Des touches permettent la sélection du mode d'expédition et du pays de destination.

La présente invention a pour but de réaliser un pèse-lettre pour une machine à affranchir, de conception très simple, de dimensions réduites et de faible coût, qui rentre dans la gamme des petits matériels de bureau.

La présente invention a pour objet un pèse-lettre pour une machine à affranchir, couplable à un calculateur de taxes, qui est lui-même couplable à une tête d'impression de la machine pour sa commande, et comportant un plateau horizontal de réception de lettres couplé à un support et mobile verticalement en fonction du poids de la lettre qu'il reçoît, un bras de codage couplé mécaniquement audit plateau, pour être rendu mobile avec lui, et présentant des éléments de codage de son déplacement, des moyens de détection desdits éléments de codage, montés fixes en regard dudit bras de codage pour la détection de chacun des éléments de codage défilant devant eux, et une unité de traitement reliée auxdits moyens de détection, élaborant pour le calculateur un signal dit de mesure représentant parmi plusieurs tranches de poids définies celle dans laquelle se situe la lettre présente sur le plateau, caractérisé en ce qu'au moins ledit bras de codage et les moyens de détection sont montés à l'intérieur d'un boîtier plat vertical quasi-fermé, dit boîtier de pèse-lettre, présentant une fente verticale d'introduction et de maintien de lettre, sur sa face supérieure, avec ledit plateau constituant le fond de ladite fente.

Avantageusement le boîtier est équipé d'un connecteur sur l'une de ses faces verticales et la machine à affranchir utilisant le pèse-lettre est également équipée d'un connecteur complémentaire sur l'une de ses faces verticales, ledit pèse-lettre connecté à la machine constituant alors un module semi-intégré à la machine.

Avantageusement aussi, les moyens de détection et des moyens de différenciation sont seuls montés avec le bras de codage dans le boîtier et l'unité de traitement est intégrée dans la machine à affranchir, avec le calculateur de taxes.

Les caractéristiques et avantages de la présente invention ressortiront de la description faite ci-après d'un exemple de réalisation illustré dans les dessins. Dans ces dessins :
- la figure 1 illustre schématiquement un pèse-lettre de machine à affranchir selon la présente invention couplé aux moyens d'impression de la machine,
- la figure 2 montre schématiquement le pèse-lettre et la machine à affranchir selon la présente invention.

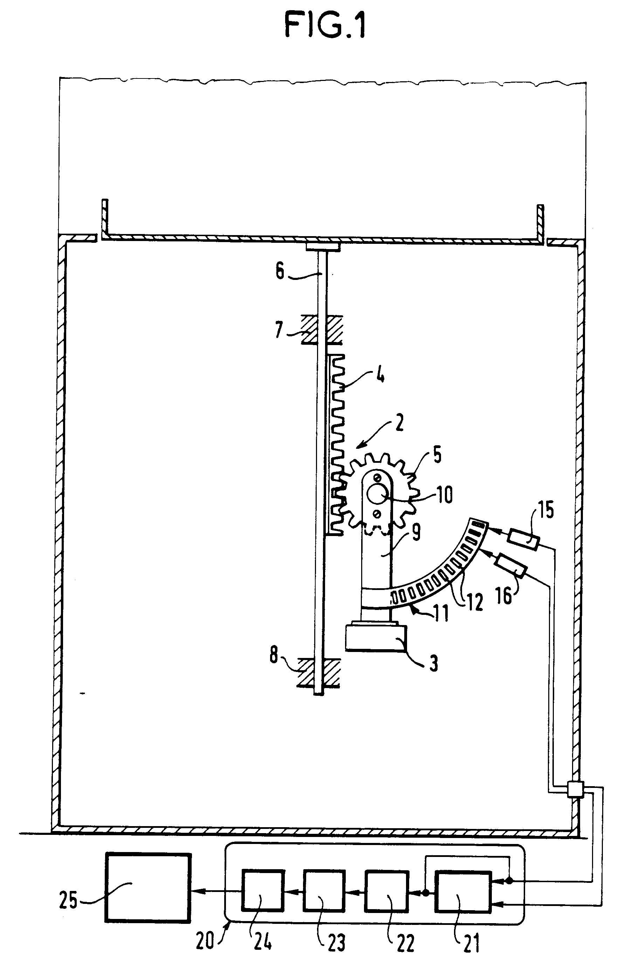

Dans la figure 1, on a illustré en 1 un plateau horizontal de réception de lettre du pèse-lettre. Le plateau est mobile en translation verticale avec le poids de la lettre. Un mécanisme 2 sollicité par un contrepoids 3 assure son maintien sur un axe fixe horizontal 10.

Ce mécanisme 2 est montré constitué par une crémaillère 4 et un pignon 5 engrené sur la crémaillère. La crémaillère est verticale ; elle est portée par un bras support 6. Le bras support 6 a son extrémité supérieure fixée sous le plateau 1, à sa partie centrale. Il est par ailleurs guidé en translation verticale entre deux paires de guides 7 et 8.

Le contrepoids 3 est monté en bout d'un bras support 9. Le bras support 9 a son extrémité opposée rendue solidaire du pignon 5. Le pignon 5 en prise sur la crémaillère est libre en rotation sur l'axe 10.

Un bras de codage 11 est solidaire du bras support 9. Il est en forme d'arc de cercle centré sur l'axe 10. Il s'étend d'un côté du bras support 9 et porte une série d'éléments de codage 12. Les éléments de codage sont de fines fentes, à pas réguliers entre elles, qui définissent un code à barres. Ce bras de codage 11 est mobile en rotation autour de l'axe 10, avec le déplacement vertical du plateau 1, et donc de la crémaillère 4 qui elle-même entraîne le pignon en rotation.

Deux détecteurs photo-électriques 15 et 16 sont montés fixes en regard des éléments de codage 12 pour leur détection quand le bras de codage 11 est mobile en rotation. Ces deux détecteurs 15 et 16 sont montés en quadrature en regard des éléments de codage 12 ; ils sont à une distance définie l'un de l'autre, différente d'un nombre entier de pas des éléments, en étant l'un décentré dans l'intervalle entre deux éléments quand l'autre est face à l'un des éléments. Ces deux détecteurs en quadrature permettent la détection du sens de défilement des éléments devant eux, pour le comptage des éléments dans l'un des sens et leur décomptage dans l'autre sens.

Ces deux détecteurs sont du type à fourche optique, à photodiode d'un côté du bras de codage et photodétecteur de l'autre côté du bras de codage.

Le mécanisme 2, avec le contrepoids 3 et le bras de codage 11, et les deux détecteurs 15 et 16 sont logés dans un boîtier 18 de pèse-lettre. Ces deux détecteurs 15 et 16 sont couplés à une unité de traitement 20, de préférence extérieure au boîtier 18. Cette unité de traitement 20 pour le pèse-lettre comporte essentiellement un circuit 21 de différenciation de sens de défilement des éléments 12 relié aux détecteurs 15 et 16, un circuit de comptage/décomptage 22 relié à l'un des détecteurs, 15 par exemple, un circuit de traitement 23 relié au circuit 22 et un calculateur de taxes 24 relié au circuit de traitement 23. Le calculateur de taxes 24 est couplé à une tête d'impression 25 de la machine à affranchir.

Le circuit 21 détecte le sens de défilement des éléments 12 à partir des fronts des signaux des détecteurs. Le circuit 22 est mis en comptage et décomptage alternativement à chaque inversion du sens de défilement des éléments de codage ; il compte et décompte les éléments de codage successifs détectés par le détecteur 15. Il fournit des valeurs successives de mesure correspondant aux amplitudes maximales et minimales des oscillations du plateau 1, à la réception de chaque lettre sur ce plateau. Le circuit de traitement 23 reçoit ces valeurs successives maximales et minimales, il intègre les seules premières valeurs reçues pour élaborer un signal dit de commande. Ce signal de commande est utilisé pour la sélection, entre différentes tranches de poids définies préalablement, de la tranche de poids dans laquelle se situe la lettre concernée. Cette tranche sélectionnée constitue le signal dit de mesure utilisé pour l'établissement du montant d'affranchissement correspondant, par le calculateur de taxes 24. Les différentes tranches de poids sont définies dans le circuit de traitement 23 ou dans le calculateur de taxes. Ces différentes tranches sont 0-20 g, 20-50 g, 50-100 g par exemple. Les tranches de poids peuvent également être définies sélectivement par 5 g. La taxe convenable élaborée est transmise à la tête d'impression 25 pour l'affranchissement de cette lettre par la machine.

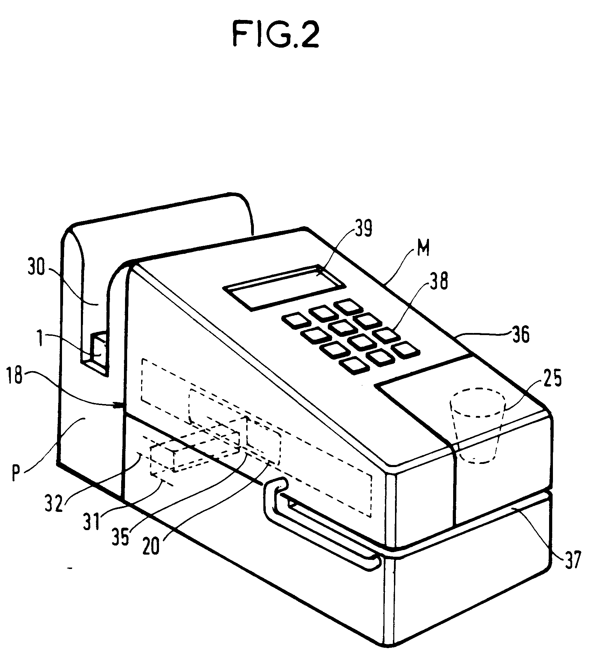

Dans la figure 2 on a montré schématiquement la machine à affranchir avec ce pèse-lettre. La machine à affranchir est désignée par la lettre M et le pèse-lettre par la lettre P. Ce pèse-lettre forme un module semi-intégré à la machine M. Il vient s'accoler contre la face arrière de la machine telle que vue par l'utilisateur, en se raccordant à la machine.

Le boîtier 18 du pèse-lettre est un boîtier plat vertical dont l'une des grandes faces verticales, dite face avant vient contre la face arrière de la machine. Ce boîtier 18 a une fente verticale 30 d'introduction et de maintien de lettre, sur sa face supérieure. Le plateau 1 de réception de lettre vient constituer le fond de la fente, sensiblement à mi-hauteur du pèse-lettre P.

La machine est équipée d'un premier connecteur 31 sur sa face arrière et le pèse-lettre d'un deuxième connecteur 32, complémentaire du premier, sur la face avant de son boîtier. Ces deux connecteurs sont sensiblement à même hauteur par rapport à la base de la machine et celle du pèse-lettre. En regard de la figure 1, on précise que le connecteur 32 est de préférence relié aux deux détecteurs 15 et 16 contenus dans le boîtier 18 et vient les connecter par le connecteur 31 à l'unité de traitement 20 montée, avec les circuits propres à la machine, sur une ou des cartes de traitement 35 dans la machine.

Dans cette figure 2, on a illustré pour la machine à affranchir M, la tête d'impression précitée 25, par exemple à jet d'encre. On a illustré également sur son carter 36, une fente 37 d'introduction de lettre à affranchir, sur sa face avant et au-dessus de la tête 25, et un clavier 38 et un écran 39 sur sa face supérieure. Le clavier 38 permet notamment de rentrer des données relatives au pays et au mode d'expédition pour le calculateur de taxes. L'écran permet notamment d'afficher le montant d'affranchissement pour chaque lettre introduite sur le pèse-lettre puis introduite sous la tête d'impression.

La conception du module pèse-lettre selon la présente invention le rend peu encombrant, de faible prix et aisé à raccorder sur la machine où il forme un module semi-intégré. Il permet aussi d'intégrer tous les circuits électroniques de traitement qui lui sont nécessaires avec ceux propres à la machine elle-même.

La présente invention a été décrite en regard de l'exemple de réalisation illustré dans les dessins. Il est évident que l'on peut remplacer certains moyens par d'autres moyens équivalents sans sortir du cadre de cette invention comme revendiquée.

## Revendications

1. Pèse-lettre pour une machine à affranchir, couplable à un calculateur de taxes, qui est lui-même couplable à une tête d'impression de la machine pour sa commande, et comportant un plateau horizontal de réception de lettres couplé à un support et mobile verticalement en fonction du poids de la lettre qu'il reçoit, un bras de codage (11) couplé mécaniquement audit plateau (1), pour être rendu mobile avec lui, et présentant des éléments de codage (12) de son déplacement, des moyens de détection (15, 16) desdits éléments de codage, montés fixe en regard dudit bras de codage pour la détection de chacun des éléments de codage défilant devant eux, et une unité de traitement (20) reliée auxdits moyens de détection, élaborant pour le calculateur un signal dit de mesure représentant parmi plusieurs tranches de poids définies celle dans laquelle se situe la lettre présente sur le plateau, caractérisé en ce qu'au moins ledit bras de codage et les moyens de détection sont montés à l'intérieur'd'un boîtier plat vertical quasi-fermé (18), dit boîtier de pèse-lettre, présente une fente verticale (30) d'introduction et de maintien de lettre, sur sa face supérieure, avec ledit plateau (1) constituant le fond de ladite fente (30).

2. Pèse-lettre selon la revendication 1, caractérisé en ce que ladite unité de traitement (20) comporte un circuit (21) de différenciation de sens de défilement des éléments de codage devant lesdits moyens de détection (15, 16), un circuit de comptage/décomptage (22) du nombre d'éléments de codage détectés dans l'un et l'autre des sens de défilement, et un circuit de traitement (23) des valeurs maximales de comptage/décomptage, délivrant ledit signal de mesure à partir de l'intégration de ces valeurs maximales.

3. Pèse-lettre selon l'une des revendications 1 et 2, caractérisé en ce que ledit boîtier pèse-lettre (18) est équipé d'un connecteur (32) sur l'une de ses faces verticales parallèles à la fente verticale (30), pour le raccordement desdits moyens de détection à l'unité de traitement (20) extérieure audit boîtier pèse-lettre.

4. Pèse-lettre selon la revendication 3, caractérisé en ce que lesdits éléments de codage (12) forment une série de fenêtres à pas réguliers entre elles, selon un code barre, et lesdits moyens de détection sont constitués par deux détecteurs photo-électriques (15,16) montés en quadrature en regard desdites fenêtres et reliés au connecteur (32).

5. Machine à affranchir faisant utilisation du pèse-lettre selon l'une des revendication 3 et 4, caractérisée en ce qu'elle est équipée d'un connecteur (31) complémentaire du connecteur du pèse-lettre, sur l'une de ses faces verticales, pour le raccordement direct dudit pèse-lettre constituant un module semi-intégré dans ladite machine.

6. Machine à affranchir selon la revendication 5, caractérisée en ce que ladite unité de traitement (20) inclut ledit calculateur de taxes (24) et est montée sur une carte de traitement interne (35) de ladite machine à affranchir.

## Claims

1. A letter scale for a franking machine adapted to be connected to a postal charge calculator, which is itself adapted to be connected to a print head of the machine for its control, and comprising a horizontal plate adapted to receive a letter coupled to a support and mobile vertically due to the weight of the letter it receives, a coding arm (11) mechanically coupled to said plate (1) so as to move with it, and presenting coding elements (12) for encoding its movement, detection means (15, 16) for detecting said coding elements, mounted stationary regarding said coding arm for detecting each of the coding elements moving in front of them, and a processor unit (20) connected to said detection means, elaborating for the calculator a measurement signal representing among several predetermined ranges of weight the one in which the letter on the plate is situated, characterized in that at least said coding arm and the detection means are mounted inside a flat vertical partly letter scale housing (18), presenting on its upper side a vertical slot (30) for introducing and maintaining a letter, with said plate (1) constituting the bottom of said slot (30).

2. A letter scale according to claim 1, characterized in that said processor unit (20) comprises a circuit (21) for distinguishing between the directions of relative movement of the coding element in front of said detection means (15, 16), an up-and-down counter circuit (22) for counting the number of coding elements sensed in respective directions of movement, and a processor circuit (23) adapted to integrate maximal up/down counting values to produce said measurement signal.

3. A letter scale according to one of claims 1 and 2, characterized in that said letter scale casing (18) is equipped with a connector (32) on one of its vertical sides parallel to the vertical slot (30) for connecting said sensor means to the processor unit (20) outside the letter scale casing.

4. A letter scale according to claim 3, characterized in that said coding elements (12) form a series of regularly spaced windows defining a bar code and said detector means ist constituted by two photo-electric sensors (15, 16) in quadrature relationship facing said windows and connected to said connector (32).

5. A franking machine making use of the letter scale according to one of claims 3 and 4, characterized in that it is equipped on one of its vertical faces with a connector (31) complementary to the connector of the letter scale, for directly connecting said letter scale, then constituting a module semi-integrated in said machine.

6. A franking machine according to claim 5, characterized in that said processor unit (20) includes said charge amount calculator (24) and is mounted on a processor circuit board (35) inside said franking machine.

## Patentansprüche

1. Briefwaage für eine Frankiermaschine, die an einen Gebührenrechner koppelbar ist, welcher selbst an einen Druckkopf der Maschine zu seiner Steuerung ankoppelbar ist, mit einer waagrechten Empfangsplatte für Briefe, die mit einem Träger gekoppelt und in Abhängigkeit vom Gewicht des auf sie gelegten Briefs senkrecht beweglich ist, und mit einem Kodierarm (11), der mechanisch mit der Platte (1) verbunden ist, um mit dieser beweglich zu sein, und der Elemente (12) zur Kodierung seiner Verschiebung, Mittel (15, 16) zur Erfassung dieser Kodierelemente, die fest gegenüber dem Kodierarm angeordnet sind, um jedes der vor ihnen vorbeiziehenden Kodierelemente zu erfassen, und eine Verarbeitungseinheit (20) enthält, die mit den Erfassungsmitteln verbunden ist und für den Rechner ein Meßsignal erarbeitet, das von verschiedenen definierten Gewichtsbereichen denjenigen bezeichnet, in dem sich der auf der Platte vorliegende Brief befindet, dadurch gekennzeichnet, daß mindestens der Kodierarm und die Erfassungsmittel innerhalb eines flachen, senkrechten, fast geschlossenen Gehäuses (18) angeordnet sind, Briefwaagengehäuse genannt, das einen senkrechten Einführungs- und Halteschlitz (30) für die Briefe auf seiner Oberseite aufweist, wobei die Platte (1) den Boden des Schlitzes (30) bildet.

2. Briefwaage nach Anspruch 1, dadurch gekennzeichnet, daß die Verarbeitungseinheit (20) einen Kreis (21) zur Unterscheidung der Bewegungsrichtungen der Kodierelemente vor den Erfassungsmittel (15, 16), einen Vorwärts/Rückwärts-Zählkreis (22) der Anzahl von in der einen und der anderen Bewegungsrichtung erfaßten Kodierelemente und einen Verarbeitungskreis (23) der maximalen Vorwärts/Rückwärts-Zählwerte aufweist, die das Meßsignal ausgehend von der Integration dieser Maximalwerte liefert.

3. Briefwaage nach einem der Ansprüche 1 und 2, dadurch gekennzeichnet, daß das Briefwaagengehäuse (18) mit einem Verbinder (32) auf einer seiner senkrechten Flächen parallel zum senkrechten Schlitz (30) zur Verbindung der Erfassungsmittel mit der Verarbeitungseinheit (20) außerhalb des Briefwaagengehäuses versehen ist.

4. Briefwaage nach Anspruch 3, dadurch gekennzeichnet, daß die Kodierelemente (12) eine Reihe von Fenstern mit gleichmäßigem Abstand voneinander gemäß einem Strichkode bilden und daß die Erfassungsmittel aus zwei photoelektrischen Detektoren (15, 16) bestehen, die gegenphasig gegenüber diesen Fenstern angeordnet sind und mit dem Verbinder (32) verbunden sind.

5. Frankiermaschine, die die Briefwaage gemäß einem der Ansprüche 3 und 4 verwendet, dadurch gekennzeichnet, daß sie mit einem Verbinder (31) komplementär zum Verbinder der Briefwaage auf einer ihrer Seitenflächen versehen ist zum direkten Anschluß der Briefwaage, die dann einen halb in die Maschine integrierten Modul darstellt.

6. Frankiermaschine nach Anspruch 5, dadurch gekennzeichnet, daß die Verarbeitungseinheit (20) den Gebührenrechner (24) enthält und auf einer inneren Verarbeitungskarte (35) der Frankiermaschine angeordnet ist.
